# EUROPÄISCHE PATENTSCHRIFT

(11) **EP 3 077 692 B1**
(45) Veröffentlichungstag und Bekanntmachung des Hinweises auf die Patenterteilung: **10.06.2020**
(21) Anmeldenummer: 14793833.6
(22) Anmeldetag: 29.10.2014
(51) Int. Cl.: F16D 28/00, F16D 23/12, F16D 25/12, F16H 25/08

(54) **IN MAXIMALSTELLUNG VERRASTENDER AKTUATOR ZUM BETÄTIGEN EINES HYDRAULISCHEN KUPPLUNGSSTELLERS SOWIE ELEKTRISCH BETÄTIGBARES KUPPLUNGSSYSTEM**
ACTUATOR THAT LOCKS IN A MAXIMUM POSITION FOR ACTUATING A HYDRAULIC CLUTCH ACTUATOR, AND CLUTCH SYSTEM THAT CAN BE ELECTRICALLY ACTUATED
ORGANE DE COMMANDE S'ENCLIQUETANT EN POSITION MAXIMALE POUR ACTIONNER UN ACTIONNEUR HYDRAULIQUE D'EMBRAYAGE ET EMBRAYAGE À COMMANDE ÉLECTRIQUE

(30) Priorität: 05.12.2013 DE 102013225009
(43) Veröffentlichungstag der Anmeldung: 12.10.2016
(73) Patentinhaber: Robert Bosch GmbH, 70442 Stuttgart (DE)
(72) Erfinder: GERUNDT, Oliver, 71292 Friolzheim (DE); STUBNER, Armin, 77815 Buehl-Altschweier (DE); DOMMSCH, Hans-Peter, 77839 Lichtenau (DE); DEMONT, Stefan, 77815 Buehl (DE); FEIGL, Markus, 71706 Markgroeningen (DE); BSUL, Jihad, 76344 Eggenstein-Leopoldshafen (DE); DURIX, Lucas, F-67410 Drusenheim (FR); CHENG, Fengmei, 76137 Karlsruhe (DE); DREWE, Ingo, 77815 Buehl (DE); AUGIER, Jean-Luc, 71679 Asperg (DE); MARTIN, Norbert, 77855 Achern (DE); KOERNER, Michael, 53229 Bonn (DE)
(86) Internationale Anmeldenummer: PCT/EP2014/073253
(87) Internationale Veröffentlichungsnummer: WO 2015/082137

(56) Entgegenhaltungen:
- EP-A1- 2 503 174
- EP-A1- 2 568 192
- DE-A1- 19 723 394
- US-A1- 2007 227 850

## Beschreibung

### Gebiet der Erfindung

Die vorliegende Erfindung betrifft einen Aktuator zum Betätigen eines hydraulischen Kupplungsstellers sowie ein mit einem solchen Aktuator ausgestattetes, elektrisch betätigbares Kupplungssystem.

### Stand der Technik

In Kraftfahrzeugen werden herkömmlich Kupplungen dazu eingesetzt, um einen Leistungsfluss zwischen einem Motor und einem mit Rädern des Kraftfahrzeugs gekoppelten Antriebsstrang zeitweilig trennen zu können.

Als Weiterentwicklung insbesondere für durch den Fahrer zu betätigende Kupplungssysteme werden derzeit für moderne Kraftfahrzeuge elektrisch betätigbare Kupplungen entwickelt. Bei diesen ist ein Kupplungspedal nicht mehr direkt mechanisch mit der Hydraulik verbunden. Stattdessen erfasst beispielsweise ein Sensor eine aktuelle Pedalstellung und sendet daraufhin ein entsprechendes Signal an ein Steuergerät. Basierend auf diesem Signal betätigt das Steuergerät einen elektrohydraulischen Aktuator oder Aktor, der meist durch eine Drehbewegung eines Elektromotors einen Kolben in einem Geberzylinder des Hydrauliksystems des Kupplungssystems bewegt.

Solche Aktoren können beispielsweise derart implementiert sein, dass eine elektromechanisch angetriebene Spindelmutter eine Spindel bewegt, die wiederum auf einen Hydraulikkolben drückt.

In im Normalzustand geschlossenen Kupplungen sorgen im Allgemeinen Kupplungsfedern für die zum Schließen der Kupplung notwendige Kraft auf die Kupplungsscheiben. Die Charakteristik bzw. Kennlinie solcher Kupplungsfedern bestimmt bei herkömmlichen, vom Fahrer direkt mechanisch zu betätigenden Kupplungen, das von der Kupplung über die Hydraulik an das Kupplungspedal übertragene und somit vom Fahrer haptisch zu erfassende Kraftverhalten der Kupplung. Typischerweise besitzen Kupplungsfedern keine lineare Kraft-Kennlinie, sondern eine S-förmige Kennlinie. Bei der Betätigung einer Kupplung besteht im Allgemeinen der Wunsch bzw. die Anforderung, im ersten Teil der Kennlinie, d.h. bei anfänglichem Niederdrücken des Kupplungspedals, schnell mit geringer Kraft verfahren zu können und im zweiten Teil mit wesentlich größerer Kraft, d.h. die Feder ist stark gespannt, und mit hoher Genauigkeit.

Lineare Systeme, wie der oben beschriebene Spindel-Mutter-Aktor, werden solchen Anforderungen nicht gerecht.

Außerdem werden für moderne Kraftfahrzeuge zusätzliche Funktionalitäten entwickelt, um beispielsweise einen Kraftstoffverbrauch zu senken oder einen Fahrkomfort zu erhöhen. So wird derzeit beispielsweise eine Funktionalität eines sogenannten "Segelns" entwickelt, bei der das Fahrzeug in geeigneten Fahrsituation frei rollen gelassen wird, indem temporär ein Kraftschluss zwischen den Rädern und der Antriebseinheit des Fahrzeugs durch automatisiertes Betätigen der Kupplung unterbrochen wird. Während eines solchen Segelns wird die Kupplung gegebenenfalls über längere Zeitdauern hinweg offen gehalten.

Aus der EP 2 503 174 A1 ist ein Kupplungsaktuator bekannt.

Aus der DE 197 23 394 A1 ist eine Betätigungsvorrichtung zur Ansteuerung eines bewegbaren Elementes, beispielsweise eines Drehmomentübertragungssystems und/oder eines Getriebes bekannt.

### Offenbarung der Erfindung

Ausführungsformen der vorliegenden Erfindung ermöglichen einen Aktuator zum Betätigen eines hydraulischen Kupplungsstellers, der einerseits eine geeignete Kraft-Kennlinie zum Betätigen einer Kupplung bewirken kann und der andererseits einfach aufgebaut und zuverlässig arbeiten kann. Insbesondere kann bei dem Aktuator der hydraulische Kupplungssteller in bestimmten Betriebszuständen derart verfahren werden, dass der Kupplungssteller in einer Position, in der die Kupplung geöffnet ist, gehalten werden kann, d.h. eingerastet
werden kann ohne dass hierfür der Aktuator permanent mit erheblicher Leistung versorgt werden müsste.

Gemäß einem ersten Aspekt der vorliegenden Erfindung wird ein Aktuator zum Betätigen eines hydraulischen Kupplungsstellers vorgeschlagen, der einen Elektromotor, eine von dem Elektromotor um eine Achse drehend angetriebene Stellscheibe, eine mit der Stellscheibe gekoppelte Kulissenstruktur und eine Betätigungsstange aufweist. Die Kulissenstruktur bildet hierbei eine Anpressfläche, deren Radius bezogen auf die Achse, um die sich die Stellscheibe dreht, kontinuierlich von einem Punkt minimalen Radius in einer Betätigungs-Umlaufrichtung um die Achse hin zu einem Punkt maximalen Radius zunimmt. Die Betätigungsstange steht an ihrem einen Ende mit dem Kupplungssteller, d.h. beispielsweise mit einem Kolben eines Geberzylinders, in Eingriff. Die Betätigungsstange ist dabei derart geführt und an der Kulissenstruktur abgestützt, dass bei einem Drehen der Stellscheibe in der Betätigungs-Umlaufrichtung von der Kulissenstruktur ein Druck auf die Betätigungsstange ausgeübt wird. Der Aktuator ist dadurch gekennzeichnet, dass an der Kulissenstruktur nahe dem Punkt maximalen Radius eine Haltestruktur ausgebildet ist, welche derart ausgeführt ist, dass die Betätigungsstange aufgrund einer Wirkung der Haltestruktur in einer im Wesentlichen maximal zum Kupplungssteller ausgerückten Position verharrt, und wobei die Haltestruktur als Bereich mit konstantem Radius (r) ausgebildet ist - bei dem insbesondere die Betätigungsstange bei einer weiteren Drehung der Stellscheibe über den Punkt maximalem Radius (r) hinaus axial nicht verstellt wird und wobei die Haltestruktur als ebene, gerade Fläche der Kulissenstruktur - insbesondere eine Umfangsfläche der Stellscheibe - ausgebildet ist, bei dem die Betätigungsstange bei einer weiteren Drehung der Stellscheibe über den Punkt maximalem Radius hinaus axial zur Achse hin verstellt wird. Ideen zur Ausführungsform der vorliegenden Erfindung können unter anderem als auf den nachfolgend beschriebenen Gedanken und Erkenntnissen beruhend angesehen werden:
Wie einleitend angemerkt, können bei elektrisch betätigbaren Kupplungssystemen Aktuatoren, die Betätigungskräfte linear erzeugen, wie z.B. Spindel-Mutter-Aktuatoren, den Anforderungen an Kraft-Kennlinien zum Betätigen der Kupplung in der Regel nicht gerecht werden. Ein Lösungsansatz ist, einen Aktuator mit einer Art Kulissenscheibe zu versehen, bei der eine Anpressfläche eine Kurvenbahn beschreibt, die nicht kreisförmig um ein Rotationszentrum, sondern schneckenförmig ist. Bei einer solchen schneckenförmig ausgebildeten Anpressfläche einer Kulissenstruktur nimmt der Radius, d.h. der Abstand zwischen der Anpressfläche und dem Rotationsmittelpunkt, als Funktion des Drehwinkels zu. Die Krümmung bzw.

Kurve der Kulissenstruktur kann dabei der Kennlinie der Kupplung und den hierbei auftretenden Anforderungen angepasst werden.

Die schneckenförmige Kulissenstruktur kann an der vom Elektromotor angetriebenen Stellscheibe angebracht oder zumindest mit dieser mechanisch gekoppelt sein, so dass sie sich, wenn die Stellscheibe durch den Elektromotor um ihre Achse gedreht wird, ebenfalls dreht. Ein Ende der Betätigungsstange stützt sich dabei an der durch die Kulissenstruktur gebildeten Anpressfläche ab. Da der Radius der Kulissenstruktur variiert, kann durch Drehen der Stellscheibe und somit Drehen der Kulissenstruktur die Betätigungsstange verlagert werden.

Die Betätigungsstange, die an ihrem anderen Ende mit dem hydraulischen Kupplungssteller gekoppelt ist, der wiederum über die Hydraulik mit der federvorgespannten Kupplung in Verbindung steht, wird im Normalfall mit einer entsprechenden elastischen Vorspannungskraft gegen die Anpressfläche der Kulissenstruktur gepresst. Aufgrund einer solchen auf die Anpressfläche wirkenden Kraft und der Eigenschaft, dass der Radius der Anpressfläche hin zu einem Punkt minimales Radius abnimmt, wird ein rückstellendes Drehmoment auf die mit der Kulissenstruktur verbundene Stellscheibe bewirkt. Dieses Drehmoment versucht, die Stellscheibe hin zu einer Position zu verlagern, in der die Kupplung nicht über die Betätigungsstange betätigt wird. Soll die Kupplung betätigt werden, muss dieses Drehmoment mittels des an der Stellscheibe angreifenden Elektromotors überkompensiert werden, um die Stellscheibe in eine Position zu verfahren, in der die Betätigungsstange die Kupplung betätigt.

Um die Kupplung beispielsweise beim Segeln über längere Zeiträume hin in einem betätigten Zustand zu halten, muss bei herkömmlichen Aktuatoren somit der die Stellscheibe antreibende Elektromotor permanent gegen das auf die Stellscheibe wirkende rückstellende Drehmoment anarbeiten und muss somit durchgängig bestromt werden.

Erfindungsgemäß, es wird daher vorgeschlagen, an der Kulissenstruktur in der Nähe des Punktes maximalen Radius der Anpressfläche eine Haltestruktur vorzusehen. Diese Haltestruktur soll derart ausgebildet sein, dass sie bewirkt, dass die Betätigungsstange in einer im Wesentlichen maximal ausgerückten Position einrastet. Mit anderen Worten soll die Haltestruktur derart ausgebildet sein, dass die Betätigungsstange in einer Position, in der sie die Kupplung betätigt, derart gehalten wird und mit der Stellscheibe zusammenwirkt, dass sie auf die Stellscheibe kein rückstellendes Drehmoment ausübt. Da somit in dem eingerasteten Zustand kein rückstellendes Drehmoment von dem Elektromotor überkompensiert werden muss, braucht dieser nicht bestromt werden, wenn die Kupplung beispielsweise während des Segelns länger anhaltend betätigt bleiben soll.

Gemäß einer Ausführungsform ist die Betätigungsstange in Richtung hin zu der Kulissenstruktur elastisch vorgespannt ist und die Kulissenstruktur derart ausgestaltet ist, dass von der Betätigungsstange eine Kraft aufgrund der Haltestruktur derart auf die Stellscheibe ausgeübt wird, dass zum Drehen der Stellscheibe entgegen der Betätigungs-Umlaufrichtung zumindest kurzzeitig von dem Elektromotor eine Kraft auf die Stellscheibe in der Richtung entgegen der Betätigungs-Umlaufrichtung ausgeübt werden muss. Mit anderen Worten befindet sich der Aktuator, wenn die Betätigungsstange in der ausgerückten Position eingerastet ist, in einer Art metastabilem Zustand, aus dem er erst dadurch wieder heraus bewegt werden kann, indem von dem Elektromotor eine Kraft entgegen der Betätigungs-Umlaufrichtung auf die Stellscheibe ausgeübt wird.

Erfindungsgemäß ist die Haltestruktur als Bereich mit konstantem Radius ausgebildet, bei dem insbesondere die Betätigungsstange bei einer weiteren Drehung der Stellscheibe über den Punkt maximalem Radius hinaus, axial nicht verstellt wird.

In einer erfindungsgemäßen Alternative ist die Haltestruktur als ebene, gerade Fläche der Kulissenstruktur, insbesondere eine Umfangsfläche der Stellscheibe, ausgebildet, bei dem die Betätigungsstange bei einer weiteren Drehung der Stellscheibe über den Punkt maximalem Radius hinaus axial zur Achse hin verstellt wird.

Gemäß einer Ausführungsform ist die Betätigungsstange über ein an dieser angebrachtes Lager an der Kulissenstruktur abgestützt. Das Lager, mit der sich die Betätigungsstange an der Kulissenstruktur abstützt, braucht nicht in direktem mechanischen Kontakt mit der Kulissenstruktur stehen, sondern es kann an dem Lager beispielsweise eine Rolle gelagert vorgesehen sein, über die sich das Lager an der Kulissenstruktur abstützen kann und die entlang der Anpressfläche der Kulissenstruktur rollen kann.

Gemäß einer Ausführungsform kann an einer Welle des Elektromotors eine Spindel angeordnet sein und die Stellscheibe als Schneckenrad ausgebildet sein, dessen Zahnung mit der Spindel in Eingriff steht. In dieser konkreten Ausführungsform kann die als Schneckenrad ausgebildete Stellscheibe durch den Elektromotor mit Hilfe der an dessen Welle vorgesehenen Spindel angetrieben werden, ähnlich einem Schneckengetriebe. Eine

Winkelgeschwindigkeit der Stellscheibe hängt dabei linear von einer Drehzahl des Elektromotors ab. Eine Kraft, die von der mit der Stellscheibe gekoppelten ersten Kulissenstruktur auf die Betätigungsstange ausgeübt wird, ist jedoch aufgrund der schneckenartigen Form der Kulissenstruktur nicht linear abhängig von der Drehzahl des Elektromotors.

Gemäß einer Ausführungsform der Erfindung sind die Stellscheibe und die Kulissenstruktur einstückig ausgebildet. Mit anderen Worten kann die Kulissenstruktur direkt an der Stellscheibe angeformt sein. Beispielsweise kann das gemeinsame Bauteil als Spritzgussteil gefertigt werden.

Gemäß einer Ausführungsform sind die Welle des Elektromotors und die Stellstange in einem schrägen Winkel zueinander angeordnet. Beispielsweise kann die Stellstange derart angeordnet werden, dass sie von einer Position, an der sie mit ihrem einen Ende an der ersten Kulissenstruktur anliegt, schräg zu der Welle des Elektromotors und somit mit ihrem gegenüberliegenden Ende schräg zurück hin zum Elektromotor angeordnet ist. Der an dem zweiten Ende der Stellstange angeordnete Kupplungssteller kann somit nahe neben dem Elektromotor angeordnet werden, so dass eine gesamte Baugröße des Aktuators einschließlich des Kupplungsstellers minimiert werden kann.

Ein elektrisch betätigbares Kupplungssystem, das einen Aktuator gemäß einer Ausführungsform der Erfindung beinhaltet, kann einerseits ein gewünschtes nicht-lineares Kraftverhalten beim Betätigen der Kupplung bewirken, andererseits kann der Aktuator bzw. die daran vorgesehene Betätigungsstange in einem im Wesentlichen maximal ausgerückten Zustand eingerastet werden, sodass die Kupplung über längere Zeitdauern betätigt bleiben kann, ohne dass der Elektromotor ständig bestromt sein müsste.

Es wird darauf hingewiesen, dass mögliche Merkmale und Vorteile von Ausführungsformen der Erfindung hierin mit Bezug auf unterschiedliche Ausführungsformen der Erfindung beschrieben sind. Ein Fachmann erkennt, dass die Merkmale in geeigneter Weise ausgetauscht oder kombiniert werden können, um zu weiteren Ausführungsformen der Erfindung zu gelangen.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1: zeigt schematisch ein elektrisch betätigbares Kupplungssystem.
- Fig. 2: zeigt eine perspektivische Ansicht eines Aktuators gemäß einer Ausführungsform der vorliegenden Erfindung.
- Fig. 3: zeigt eine perspektivische Ansicht eines Aktuators gemäß einer weiteren Ausführungsform der vorliegenden Erfindung.
- Fig. 4: zeigt eine perspektivische Ansicht eines Aktuators gemäß noch einer weiteren Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### Ausführungsformen der Erfindung

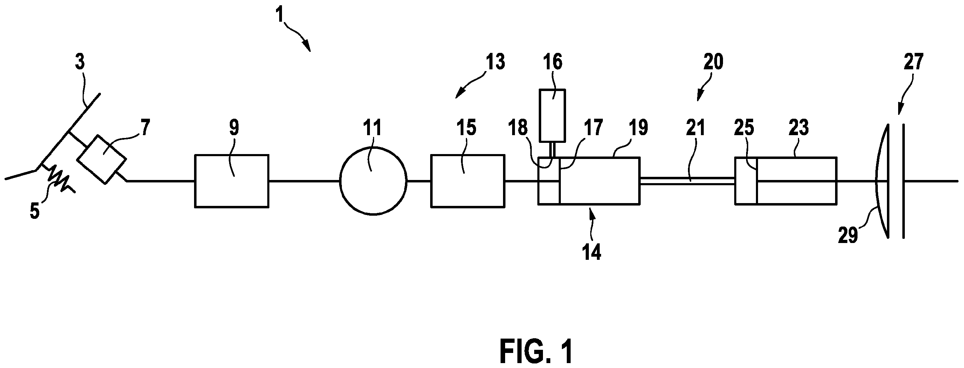

Fig. 1 zeigt ein elektrisch betätigbares Kupplungssystem 1 für ein Kraftfahrzeug. Ein Fußpedal 3 kann entgegen einer Feder 5 von einem Fahrer niedergedrückt werden. Eine aktuelle Position des Fußpedals 3 wird dabei mit Hilfe eines Sensors 7 ermittelt und an ein Steuergerät 9 weitergegeben. Basierend auf den Signalen des Sensors 7 steuert das Steuergerät 9 einen Elektromotor 11 eines Aktuators 13 dazu an, über eine geeignete Kraftübertragungseinrichtung 15, beispielsweise in Form eines Getriebes, einen Kolben 17 innerhalb eines einen Teil eines Kupplungsstellers 14 bildenden Geberzylinders 19 zu verfahren. Hierdurch kann Hydrauliköl durch eine Leitung 21 in einen Nehmerzylinder 23 gepresst werden. Ein Kolben 25 in dem Nehmerzylinder 23 steht in mechanischer Verbindung mit der Kupplung 27 und kann diese, betätigt durch den Nehmerzylinder 23, ausrücken. Eine an der Kupplung 27 vorgesehene Rückstellfeder 29 sorgt dabei für einen entsprechenden Gegendruck auf den Nehmerzylinder 23, so dass bei nachlassender Betätigung des Fußpedals 3 und entsprechender Ansteuerung des Aktuators 13 die Kupplung 27 wieder eingekuppelt wird. In einem hinteren Bereich des den Kupplungssteller 14 bildenden Geberzylinders 19 ist eine Schnüffelbohrung 18 vorgesehen. Wenn der Kolben 17 weit genug nach hinten über diese Schnüffelbohrung 18 hinaus verfahren wird, kann Hydrauliköl aus einem Reservoir 16 in das Innere des Geberzylinders 19 nachströmen.

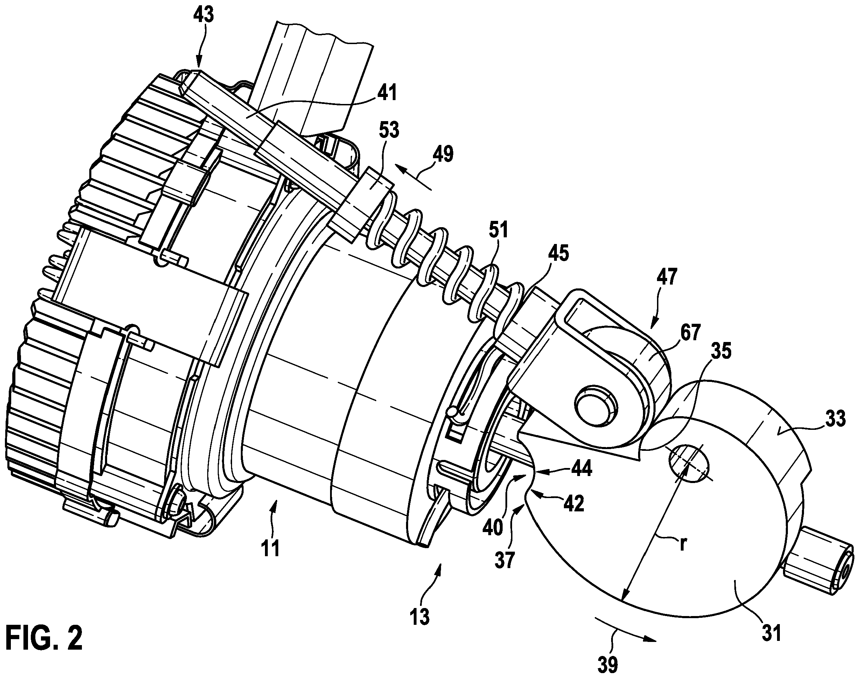

Fig. 2 zeigt eine perspektivische Ansicht eines Aktuators 13, bei dem ein Elektromotor 11 eine Stellscheibe (in Fig. 2 aufgrund der Perspektive nicht erkennbar) mit einer daran angebrachten Kulissenstruktur 31 drehend antreibt. Die Kulissenstruktur 31 bildet im dargestellten Beispiel an Ihrer Mantelfläche eine Anpressfläche 33, deren Radius r kontinuierlich von einem Punkt 35 minimalen Radius hin zu einem Punkt maximalen Radius 37 zunimmt, wenn die mit der Kulissenstruktur gekoppelte Stellscheibe die Kulissenstruktur 31 in einer Betätigungs-Umlaufrichtung 39 dreht. Eine Betätigungsstange 41 ist an ihrem einen Ende 43 mit einem hydraulischen Kupplungssteller (in Fig. 2 nicht dargestellt) gekoppelt. Mit ihrem anderen Ende 45 ist die Betätigungsstange 41 über ein daran angebrachtes Lager 47 an der Anpressfläche 33 der Kulissenstruktur 31 abgestützt. Wenn die Kulissenstruktur 31 in der Betätigungs-Umlaufrichtung 39 gedreht wird, presst die Anpressfläche 31 aufgrund des zunehmenden Radius r die Betätigungsstange 41 kontinuierlich in Richtung 49 hin zu dem hydraulischen Kupplungssteller. Dabei wird eine am anderen Ende mit dem Kupplungssteller gekoppelte Kupplung betätigt, d.h. die Kupplungsscheiben ausgerückt und somit voneinander getrennt. Eine die Kupplungsscheiben hin zueinander vorspannende Feder bewirkt dabei eine rückstellende Kraft auf den Kupplungssteller, sodass die Betätigungsstange 41 hin zu der Anpressfläche 33 gepresst wird. Ergänzend wird bei der in Fig. 2 dargestellten Ausgestaltung die Betätigungsstange 41 durch eine zusätzliche Feder 51, die sich an einem Lager 53 abstützt, entgegen der Richtung 49, d.h. weg von dem Kupplungssteller, vorgespannt und somit gegen die Anpressfläche 33 gedrückt.

Nahe dem Punkt 37 maximalen Radius weist die Anpressfläche 33 eine lokale Vertiefung 40 auf. Am Anfang 42 dieser Vertiefung 40, d.h. direkt hinter dem Punkt 37 maximalen Radius, nimmt der Radius r der Anpressfläche 33 lokal etwas ab, bis er ab einem Zentrum 44 der Vertiefung 40 wieder zunimmt. Wenn die Kulissenstruktur 31 somit in Betätigungs-Umlaufrichtung 39 über den Punkt 37 maximalen Radius hinaus weiter gedreht wird, gelangt die an der Anpressfläche 33 entlang rollende Rolle 67 des Lagers 47 der Betätigungsstange 41 in Eingriff mit der Vertiefung 40, so dass die Betätigungsstange 41 quasi einrastet. In diesem eingerasteten Zustand ist die Betätigungsstange näherungsweise maximal ausgerückt, sodass die Kupplung betätigt wird. Der eingerastete Zustand ist metastabil, d.h. die Kulissenscheibe 31 wird aufgrund der von der Betätigungsstange 41 übertragenen Rückstellkraft, welche entgegen der Betätigungsrichtung 49 wirkt, nicht verdreht sondern verbleibt in ihrer Position. Somit bleibt auch die Betätigungsstange 41 in ihrer ausgerückten Position, ohne dass der Elektromotor 11 permanent eine Drehmoment bewirken müsste.

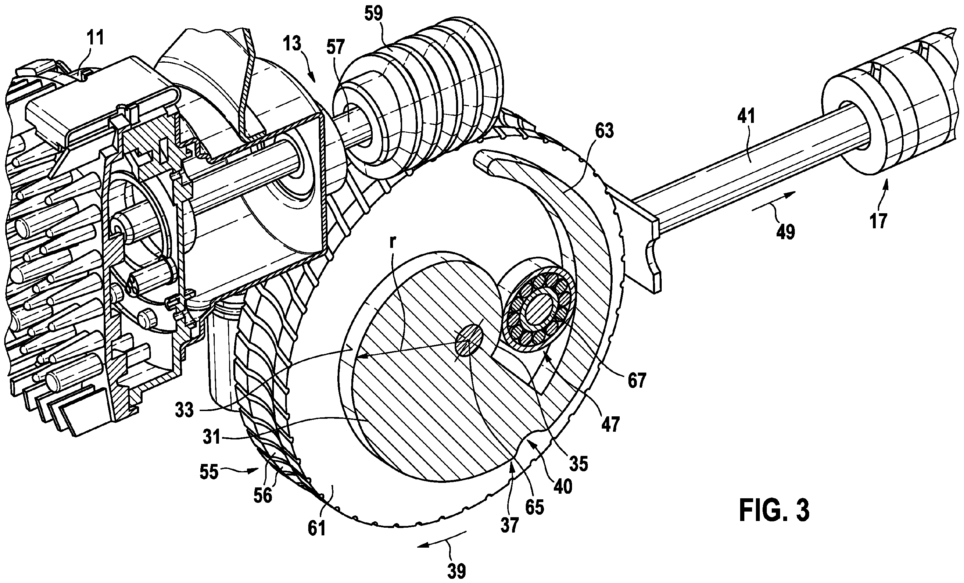

In Fig. 3 ist eine perspektivische Ansicht einer weiteren Ausführungsform eines erfindungsgemäßen Aktuators 13 dargestellt. Ein Elektromotor 11 treibt dabei über eine Welle 57 eine Spindel 59 an. Die Spindel 59 steht in Eingriff mit einer Zahnung 56 einer in diesem Fall als Schneckenrad 61 ausgebildeten Stellscheibe 55. Der Elektromotor 11 kann somit die Stellscheibe 55 in oder gegen eine Betätigungs-Umlaufrichtung 39 bewegen.

An der Stellscheibe 55 sind an den beiden Stirnflächen jeweils Kulissenstrukturen 31 ausgebildet. Jede dieser Kulissenstrukturen 31 formt eine Anpressfläche 33, deren Radius r in Bezug auf eine Achse 65 der Stellscheibe 55 in der Betätigungs-Umlaufrichtung 39 bis hin zu einem Punkt 37 kontinuierlich zunimmt.

Wird die Stellscheibe 55 entsprechend von dem Motor 11 gedreht, rollen die mit der Betätigungsstange 41 in Verbindung stehenden Lager 47 über Rollen 67 an der Anpressfläche 33 entlang. Aufgrund des zunehmenden Radius r der Anpressfläche 33 wird dabei ein Druck auf die Betätigungsstange 41 ausgeübt und die Betätigungsstange 41 sukzessive in Richtung 49 des Kolbens 17 verschoben. Ein dadurch durch den Kolben 17 bewirkter Hydraulikdruck kann dementsprechend eine Kupplung 27 ausrücken, d.h. auskuppeln, lassen.

Um die Kupplung 27 anschließend wieder einzukuppeln, wird der Aktuator 13 in umgekehrter Richtung betrieben. Während der Motor 11 die Stellscheibe 55 dreht, werden dann die Rollen 67 der Lager 47 permanent gegen die Anpressfläche 33 der ersten Kulissenstruktur 31 gepresst, da von der Rückstellfeder 29 der Kupplung 27 eine Rückstellkraft auf die mit den Lagern 47 gekoppelte Betätigungsstange 41 ausgeübt wird.

In jeder Anpressfläche 33 ist wiederum eine Vertiefung 40 vorgesehen. Wenn der Aktuator bis in seine Maximalstellung betätigt wird, greifen die Rollen 67 des Lagers 47 in die Vertiefungen 40 ein und verhindern, dass die Betätigungsstange 41 sich von sich aus zurückbewegen kann, indem sie durch die von ihr übertragene Rückstellkraft auf die Anpressfläche 33 die Stellscheibe 55 zurückdreht. Erst wenn der Motor 11 aktiv die Stellscheibe 55 entgegen der Betätigungsrichtung 39 dreht, bis sich die Rollen 67 aus den Vertiefungen 40 heraus bewegt haben, kann sich die Stellscheibe 55 wieder zurück, entgegen der Betätigungs-Umlaufrichtung 39 drehen, mit oder ohne Unterstützung durch den Motor 11.

Bei der in Fig. 3 dargestellten Ausführungsform verläuft die Betätigungsstange 41 im Wesentlichen parallel zu der Welle 57 des Elektromotors 11.

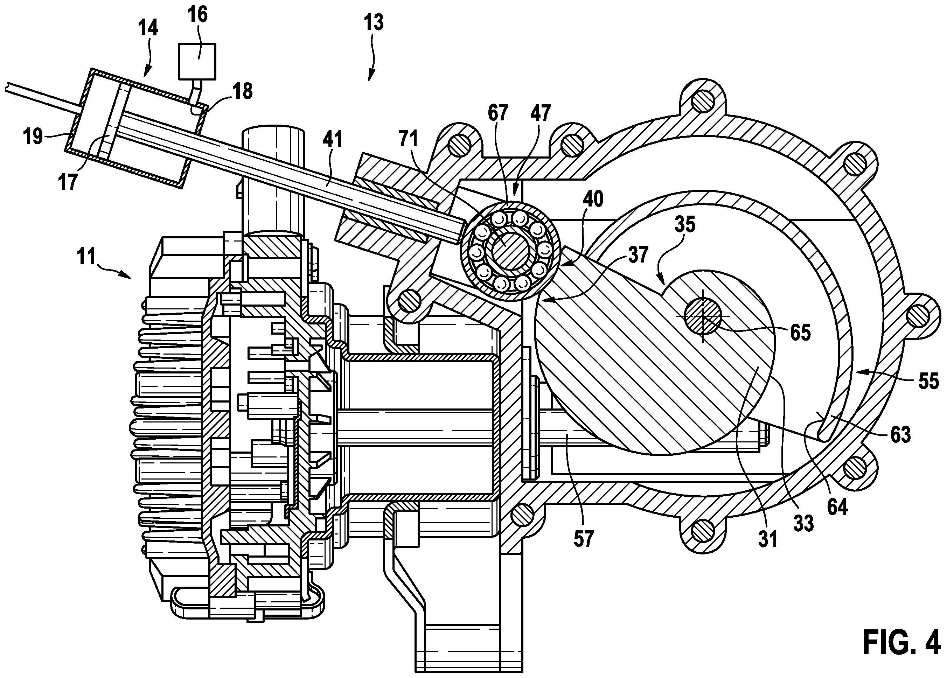

In einer alternativen Ausgestaltung, wie sie in der perspektivischen Ansicht der Fig. 4 dargestellt ist, ist die Betätigungsstange 41 hingegen in einem schrägen Winkel in Bezug auf die Welle 57 des Elektromotors 11 angeordnet, und zwar schräg in Richtung zurück zu dem Elektromotor 11. Der Kupplungssteller 14 kann somit neben dem Elektromotor 11 angeordnet werden, wodurch sich der gesamte Bauraum für das Kupplungssystem 1 verringern lässt.

Abgesehen von der Anordnung der Betätigungsstange 41 sind die Strukturen und Wirkweisen der Komponenten des in Fig. 4 dargestellten Aktuators 13 weitgehend ähnlich wie bei dem in Fig. 3 dargestellten System.

## Patentansprüche

1. Aktuator (13) zum Betätigen eines hydraulischen Kupplungsstellers (14), aufweisend:
einen Elektromotor (11),
eine von dem Elektromotor (11) um eine Achse (65) drehend angetriebene Stellscheibe (55),
eine mit der Stellscheibe (55) gekoppelte Kulissenstruktur (31), und
eine Betätigungsstange (41),
wobei die Kulissenstruktur (31) eine Anpressfläche (33) bildet, deren Radius (r) bezogen auf die Achse (65) - insbesondere kontinuierlich - von einem Punkt (35) minimalen Radius in einer Betätigungs-Umlaufrichtung (39) um die Achse (65) hin zu einem Punkt (37) maximalen Radius zunimmt,
wobei die Betätigungsstange (41) an ihrem einen Ende (43) mit dem Kupplungssteller (14) in Eingriff steht,
wobei die Betätigungsstange (41) derart geführt und an der Kulissenstruktur (31) abgestützt ist, dass bei einem Drehen der Stellscheibe (55) in der Betätigungs-Umlaufrichtung (39) von der Kulissenstruktur (31) ein Druck auf die Betätigungsstange (41) ausgeübt wird, **dadurch gekennzeichnet, dass**
an der Kulissenstruktur (31) - nahe dem Punkt (37) maximalen Radius - eine Haltestruktur (40) ausgebildet ist, welche derart ausgeführt ist, dass die Betätigungsstange (41) aufgrund einer Wirkung der Haltestruktur (40) in einer im Wesentlichen maximal zum Kupplungssteller (14) ausgerückten Position verharrt,
wobei die Haltestruktur (40) als Bereich mit konstantem Radius (r)
ausgebildet ist - bei dem die Betätigungsstange (41) bei einer weiteren Drehung der Stellscheibe (55) über den Punkt (37) maximalem Radius (r) hinaus axial nicht verstellt wird.
oder
wobei die Haltestruktur (40) als ebene, gerade Fläche der Kulissenstruktur (31) ausgebildet ist, bei dem die Betätigungsstange (41) bei einer weiteren Drehung der Stellscheibe (55) über den Punkt (37) maximalem Radius hinaus axial zur Achse (65) hin verstellt wird.

2. Aktuator nach Anspruch 1, wobei die Betätigungsstange (41) in Richtung hin zu der Kulissenstruktur (31) elastisch vorgespannt ist und die Kulissenstruktur (31) derart ausgestaltet ist, dass von der Betätigungsstange (41) eine Rückstellkraft aufgrund der Haltestruktur (40) derart auf die Stellscheibe (31) ausgeübt wird, dass zum Drehen der Stellscheibe (55) entgegen der Betätigungs-Umlaufrichtung (39) zumindest kurzzeitig von dem Elektromotor (11) eine Kraft auf die Stellscheibe (31) in der Richtung entgegen der Betätigungs-Umlaufrichtung (39) ausgeübt werden muss.

3. Aktuator nach einem der Ansprüche 1 oder 2, wobei die Betätigungsstange (41) über ein an dieser angebrachtes Lager (47) an der Kulissenstruktur (31) abgestützt ist.

4. Aktuator nach einem der Ansprüche 1 bis 3, wobei an einer Welle (57) des Elektromotors (11) eine Schnecke (59) angeordnet ist und wobei die Stellscheibe (55) als Schneckenrad (61) ausgebildet ist, dessen Zahnung (56) mit der Schnecke (59) in Eingriff steht.

5. Aktuator nach einem der Ansprüche 1 bis 4, wobei die Stellscheibe (55) mit der Kulissenstruktur (31) einstückig ausgebildet ist.

6. Aktuator nach einem der Ansprüche 1 bis5, wobei eine Welle (57) des Elektromotors (11) und die Betätigungsstange (41) in einem schrägen Winkel zueinander angeordnet sind.

7. Elektrisch betätigbares Kupplungssystem (1), aufweisend einen Aktuator (13) zum Betätigen eines hydraulischen Kupplungsstellers (14) gemäß einem der Ansprüche 1 bis 6.

## Claims

1. Actuator (13) for actuating a hydraulic clutch actuator (14), having:
an electric motor (11),
an actuating disc (55) which is driven rotationally about an axis (65) by the electric motor (11),
a slotted guide structure (31) which is coupled to the actuating disc (55), and
an actuating rod (41),
the slotted guide structure (31) forming a pressing face (33), the radius (r) of which increases, in particular continuously, in relation to the axis (65) from a point (35) of minimum radius in an actuating circulating direction (39) about the axis (65) towards a point (37) of maximum radius,
the actuating rod (41) being in engagement at its one end (43) with the clutch actuator (14),
the actuating rod (41) being guided and supported on the slotted guide structure (31) in such a way that, in the case of a rotation of the actuating disc (55) in the actuating circulating direction (39), a pressure is exerted on the actuating rod (41) by the slotted guide structure (31),
**characterized in that**
a holding structure (40) is configured on the slotted guide structure (31), close to the point (37) of maximum radius, which holding structure (40) is configured in such a way that, on account of an action of the holding structure (40), the actuating rod (41) remains in a position, in which it is disengaged substantially at a maximum with respect to the clutch actuator (14),
the holding structure (40) being configured as a region with a constant radius (r), in the case of which the actuating rod (41) is not adjusted axially in the case of a further rotation of the actuating disc (55) beyond the point (37) of maximum radius (r),
or
the holding structure (40) being configured as a planar,
straight face of the slotted guide structure (31), in the case of which the actuating rod (41) is adjusted axially towards the axis (65) in the case of a further rotation of the actuating disc (55) beyond the point (37) of maximum radius.

2. Actuator according to Claim 1, the actuating rod (41) being prestressed elastically in the direction towards the slotted guide structure (31), and the slotted guide structure (31) being configured in such a way that a restoring force is exerted on the actuating disc (31) by the actuating rod (41) on account of the holding structure (40), in such a way that a force has to be exerted at least briefly by the electric motor (11) on the actuating disc (31) in the direction counter to the actuating circulating direction (39) in order to rotate the actuating disc (55) counter to the actuating circulating direction (39).

3. Actuator according to either of Claims 1 and 2, the actuating rod (41) being supported on the slotted guide structure (31) via a bearing (47) which is attached to the said actuating rod (41).

4. Actuator according to one of Claims 1 to 3, a worm (59) being arranged on a shaft (57) of the electric motor (11), and the actuating disc (55) being configured as a worm gear (61), the toothing (56) of which is in engagement with the worm (59).

5. Actuator according to one of Claims 1 to 4, the actuating disc (55) being configured in one piece with the slotted guide structure (31).

6. Actuator according to one of Claims 1 to 5, a shaft (57) of the electric motor (11) and the actuating rod (41) being arranged at an oblique angle with respect to one another.

7. Electrically actuable clutch system (1), having an actuator (13) for actuating a hydraulic clutch actuator (14) according to one of Claims 1 to 6.

## Revendications

1. Actionneur (13) pour l'actionnement d'un organe de commande d'embrayage (14) hydraulique, présentant
un moteur électrique (11),
un disque de commande (55) entraîné en rotation autour d'un axe (65) par le moteur électrique (11),
une structure de coulisse (31) accouplée au disque de commande (55), et
une tige d'actionnement (41),
la structure de coulisse (31) formant une surface de pressage (33) dont le rayon (r) augmente par rapport à l'axe (65), en particulier en continu, depuis un point (35) de rayon minimal dans une direction périphérique d'actionnement (39) autour de l'axe (65) jusqu'à un point (37) de rayon maximal,
la tige d'actionnement (41) étant en prise, au niveau de l'une de ses extrémités (43), avec l'organe de commande d'embrayage (14),
la tige d'actionnement (41) étant guidée et supportée sur la structure de coulisse (31) de telle sorte que dans le cas d'une rotation du disque de commande (55) dans la direction périphérique d'actionnement (39), une pression soit exercée sur la tige d'actionnement (41) par la structure de coulisse (31),
**caractérisé en ce**
**qu'**au niveau de la structure de coulisse (31), à proximité du point (37) de rayon maximal, est réalisée une structure de retenue (40) qui est réalisée de telle sorte que la tige d'actionnement (41) s'immobilise dans une position débrayée sensiblement au maximum par rapport à l'organe de commande d'embrayage (14) du fait de la structure de retenue (40),
la structure de retenue (40) étant réalisée sous forme de région de rayon constant (r), où la tige d'actionnement (41), dans le cas d'une rotation supplémentaire du disque de commande (55) au-delà du point (37) de rayon maximal (r), n'est pas déplacée axialement,
ou
la structure de retenue (40) étant réalisée sous forme de surface plane droite de la structure de coulisse (31), où la tige d'actionnement (41), dans le cas d'une rotation supplémentaire du disque de commande (55) au-delà du point (37) de rayon maximal, est déplacée axialement vers l'axe (65) .

2. Actionneur selon la revendication 1, dans lequel la tige d'actionnement (41) est précontrainte élastiquement dans la direction de la structure de coulisse (31) et la structure de coulisse (31) est configurée de telle sorte qu'une force de rappel soit exercée sur le disque de commande (31) sous l'effet de la structure de retenue (40) par la tige d'actionnement (41) de telle sorte que pour la rotation du disque de commande (55) à l'encontre de la direction périphérique d'actionnement (39), une force doive être exercée au moins brièvement par le moteur électrique (11) sur le disque de commande (31) dans la direction opposée à la direction périphérique d'actionnement (39) .

3. Actionneur selon l'une quelconque des revendications 1 et 2, dans lequel la tige d'actionnement (41) est supportée sur la structure de coulisse (31) par le biais d'un palier (47) monté sur ladite tige d'actionnement.

4. Actionneur selon l'une quelconque des revendications 1 à 3, dans lequel une vis sans fin (59) est disposée au niveau d'un arbre (57) du moteur électrique (11) et le disque de commande (55) est réalisé sous forme de roue à vis (61) dont la denture (56) est en prise avec la vis sans fin (59).

5. Actionneur selon l'une quelconque des revendications 1 à 4, dans lequel le disque de commande (55) est réalisé d'une seule pièce avec la structure de coulisse (31).

6. Actionneur selon l'une quelconque des revendications 1 à 5, dans lequel un arbre (57) du moteur électrique (11) et la tige d'actionnement (41) sont disposés suivant un angle oblique l'un par rapport à l'autre.

7. Système d'embrayage à commande électrique (1) présentant un actionneur (13) pour l'actionnement d'un organe de commande d'embrayage hydraulique (14) selon l'une quelconque des revendications 1 à 6.
